# FASCICULE DE BREVET EUROPEEN

(11) **EP 0 629 482 B1**
(45) Date de publication et mention de la délivrance du brevet: **01.03.2000**
(21) Numéro de dépôt: 94401353.1
(22) Date de dépôt: 16.06.1994
(51) Int. Cl.: B29C 45/14, B60J 10/02

(54) **Vitrage surmoulé et dispositif pour obtenir ce vitrage**
Umgossene Verglasung und Vorrichtung zu deren Herstellung
Overmoulded glazing and device for making it

(30) Priorité: 18.06.1993 FR 9307375
(43) Date de publication de la demande: 21.12.1994
(73) Titulaire: SAINT-GOBAIN VITRAGE, 92400 Courbevoie (FR)
(72) Inventeur: Le Lievre, Patrick, F-60300 Apremont (FR)
(74) Mandataire: Le Vaguerèse, Sylvain Jacques

(56) Documents cités:
- EP-A- 0 431 534
- GB-A- 2 153 292
- PATENT ABSTRACTS OF JAPAN vol. 012, no. 356 (M-745) 26 Septembre 1988 & JP-A-63 112 127 (HASHIMOTO FORMING CO LTD) 17 Mai 1988
- PATENT ABSTRACTS OF JAPAN vol. 10, no. 265 (M-515) (2321) 10 Septembre 1986 & JP-A-61 089 819 (TOYODA GOSEI CO LTD) 8 Mai 1986

## Description

L'invention concerne un dispositif afin d'obtenir un vitrage entouré, sur au moins une partie de sa périphérie, d'une matière plastique surmoulée. L'invention concerne également la méthode pour obtenir un tel vitrage.

La matière plastique entourant le vitrage sur au moins une partie de sa périphérie peut constituer un joint d'étanchéité et/ou un joint de montage. Des éléments fonctionnels tels des moyens de fixation, de guidage... peuvent également être présents soit sous forme d'inserts, c'est-à-dire au moins partiellement noyés dans la matière plastique, soit formés à partir de cette matière plastique. Usuellement cette matière plastique, ou encapsulat, enrobe au moins la largeur du chant du vitrage.

Quelle que soit la fonction de l'encapsulat, le vitrage surmoulé est obtenu généralement en injectant la matière plastique dans un moule dans lequel se trouve préalablement le vitrage. Ce moule est lui-même constitué de deux parties, une partie inférieure et une partie supérieure, encore appelées moule et contre-moule. Après avoir fermé le moule, la matière plastique est injectée par l'intermédiaire d'une tête d'injection. Un canal d'alimentation est aménagé dans la paroi du moule afin d'acheminer la matière plastique de la tête d'injection jusqu'à l'empreinte du moule. Ce canal peut être de toute forme. L'extrémité du canal d'injection, constituant une limite entre le canal d'alimentation et l'empreinte du moule, est usuellement appelée seuil d'injection. Il constitue une sorte d'entrée de la matière plastique dans l'empreinte.

Usuellement, la tête d'injection et le canal d'alimentation sont situés au niveau du plan de joint, défini par la surface située entre les deux parties du moule, c'est-à-dire la surface d'une des parties du moule, par exemple la partie supérieure, destinée à venir en contact avec la surface de sa partie complémentaire, par exemple la partie inférieure.

Cette disposition a l'avantage, d'une part, de simplifier la construction du moule et, d'autre part, de localiser le seuil d'injection, au niveau du chant du vitrage, avantageusement au centre du chant du vitrage.

Cependant, la matière plastique formée dans le canal d'alimentation constitue un excédent de matière plastique devant être éliminé après démoulage. Lorsque le seuil d'injection est relativement épais, notamment pour des vitrages de grandes dimensions, cette opération est malaisée. Elle entraîne souvent des défauts, tels une diminution de l'épaisseur de l'encapsulat, pouvant être visibles. Par ailleurs, lorsque l'encapsulat forme une lèvre de faible épaisseur au niveau du seuil d'injection, l'élimination de l'excédent de matière plastique est malaisée et endommage, parfois, la lèvre.

Par ailleurs, lors de l'injection de la matière plastique, il est nécessaire de chasser l'air présent dans l'empreinte afin d'éviter toute formation de bulles et/ou un mauvais remplissage de la cavité. Des évents peuvent être prévus à cet effet. Cependant, dans certains cas, ils ne donnent pas entièrement satisfaction.

Le document JP-A-63 112 127 décrit l'injection d'un encapsulat à la périphérie d'une plaque au moyen d'un moule comprenant au moins trois parties et présentant plusieurs seuils d'injection disposés de manière à garantir une répartition symétrique des pressions exercées à la périphérie.

L'invention vise un dispositif dont la construction soit simple et permettant une élimination facile de l'excédent de matière plastique.

L'invention concerne un dispositif pour obtenir un vitrage entouré, sur au moins une partie de sa périphérie, d'une matière plastique surmoulée, comprenant une tête d'injection, une empreinte, un seuil d'injection et une première partie de moule dans la paroi de laquelle est aménagé un canal comprenant ledit seuil d'injection et dont la surface de contact avec une seconde partie de moule forme un plan de joint du moule, ledit canal comprenant deux parties, une partie dans le plan de joint du moule et une partie hors du plan de joint du moule, dont une extrémité débouche dans l'empreinte du moule en formant ledit seuil d'injection situé sur une face de l'encapsulat recouvrant au moins une partie du vitrage, caractérisé en ce que la matière plastique surmoulée est formée par injection du type RIM (Reaction Injection Moulding), en ce que la partie du canal hors du plan de joint du moule comporte une section rectangulaire, définie par une épaisseur et une largeur, la première étant sensiblement inférieure à la seconde et en ce que le dispositif ne comprend qu'un seuil d'injection.

Le seuil d'injection est ainsi situé, selon l'invention, sur une face de l'encapsulat recouvrant au moins une partie du vitrage, avantageusement sur la face de l'encapsulat destinée à être cachée : l'élimination de l'excédent de matière plastique ne risque pas alors d'endommager l'encapsulat et notamment sa lèvre. Par ailleurs, le dispositif de l'invention offre un avantage supplémentaire qui est une élimination facile de l'excédent de matière plastique formée dans le canal.

Selon un mode de réalisation de l'invention, la tête d'injection est située dans le plan de joint, notamment dans le prolongement de la partie du canal située dans ce plan. La construction du moule ainsi que l'extraction de l'excédent de matière plastique dans le canal en sont d'autant facilitées.

Le dispositif de l'invention comprend notamment au moins un moule constitué de deux parties.

Un canal est aménagé dans la paroi d'une des parties du moule. Une partie de ce canal est située, selon l'invention, hors du plan de joint. Elle comprend, à l'une de ses extrémités, le seuil d'injection.

Cette partie peut être une courbe ou un pan. Elle comporte de préférence plusieurs segments, ces segments étant des courbes et/ou des pans. Ces segments peuvent être de section parallélépipédique ou cylindrique.

Les rayons de courbure ou les angles des pans vis-à-vis du plan de joint dépendent de la forme et des dimensions de l'encapsulat. Lorsqu'il s'agît d'un pan incliné, l'angle est compris, par exemple, entre 30 et 60° vis-à-vis du plan de joint.

Cette partie du canal selon l'invention est avantageusement composée d'au moins deux segments. De façon préférée, l'extrémité du premier segment en contact avec le deuxième segment, ou appendice d'entrée, constitue une ligne de rupture. La matière plastique formée dans le deuxième segment, dont l'extrémité constitue le seuil d'injection, ou appendice d'entrée, est de préférence désolidarisée du reste de la matière plastique formée dans le premier segment, lors de l'ouverture du moule. Afin de constituer une ligne de rupture entre l'appendice d'entrée et au moins un segment, l'extrémité du segment en contact avec l'appendice d'entrée présente une faible épaisseur. Cette épaisseur est fonction de la géométrie de la ligne de rupture ainsi que de la résistance à l'arrachement du matériau utilisé. Avantageusement, l'appendice d'entrée est perpendiculaire au plan de joint. Après ouverture du moule, l'excédent de matière plastique restant dans le canal d'alimentation est ainsi facilement retiré. La matière plastique formée dans l'appendice d'entrée est, quant à elle, solidaire de l'encapsulat et est éliminée par sectionnement, par exemple par introduction d'une lame coupante suivie, éventuellement, d'un brossage.

Quant à la partie du moule située dans le plan de joint, elle est de forme quelconque, de préférence sensiblement droite afin de limiter sa longueur.

Le volume du canal de l'invention est avantageusement limité afin, d'une part, de simplifier la construction du moule et, d'autre part, de réduire la quantité de matière plastique en excédent. Ce volume est fonction des dimensions du vitrage à encapsuler. Il est de l'ordre de 10 à 15 % du volume de l'empreinte du moule. Pour ce faire, la partie du canal située hors du plan de joint est, de préférence, constituée de deux segments, de préférence deux pans : un premier segment incliné vis-à-vis du plan de joint et un deuxième segment, ou appendice d'entrée, dont une extrémité constitue le seuil d'injection. Il relie, en quelque sorte, le premier segment incliné à l'empreinte du moule. Selon une variante avantageuse, le dispositif ne comprend qu'un seuil d'injection.

L'invention concerne également un procédé de préparation d'un vitrage entouré, sur au moins une partie de sa périphérie, d'un encapsulat en matière plastique surmoulée utilisant un dispositif de l'invention. Le procédé comprend, notamment, les étapes suivantes :
- mise en place du vitrage dans l'une des parties du moule et, éventuellement, d'inserts,
- fermeture de la partie complémentaire du moule,
- injection de la matière plastique, le seuil d'injection étant situé sur une face de l'encapsulat recouvrant au moins une partie du vitrage,
- ouverture du moule, et
- élimination de l'excédent de matière plastique formée dans le canal et au niveau de l'encapsulat.

Le procédé se caractérise par le fait que l'injection est du type RIM (Reaction Injection Moulding) et effectuée avec passage dans un canal comprenant deux parties, une partie dans le plan de joint du moule et une partie hors du plan de joint du moule, dont une extrémité débouche dans l'empreinte du moule en formant ledit seuil d'injection, et qui comporte une section rectangulaire définie par une épaisseur et une largeur, la première étant sensiblement inférieure à la seconde, et qu'un seuil d'injection unique est mis en oeuvre.

La suite de la description a trait, de façon plus détaillée, au vitrage et au dispositif selon l'invention en référence aux figures dans lesquelles :
- la figure 1 représente une section, en perspective, d'un vitrage selon un art antérieur interne,
- la figure 2 représente une section, en perspective, d'un vitrage selon l'invention,
- la figure 3 représente une coupe longitudinale d'un moule selon l'invention,
- la figure 4 comporte deux schémas, référencés 4a et 4b, représentant une coupe longitudinale de deux variantes de canaux d'alimentation selon l'invention,
- la figure 5 représente le vitrage selon l'invention après ouverture du moule.

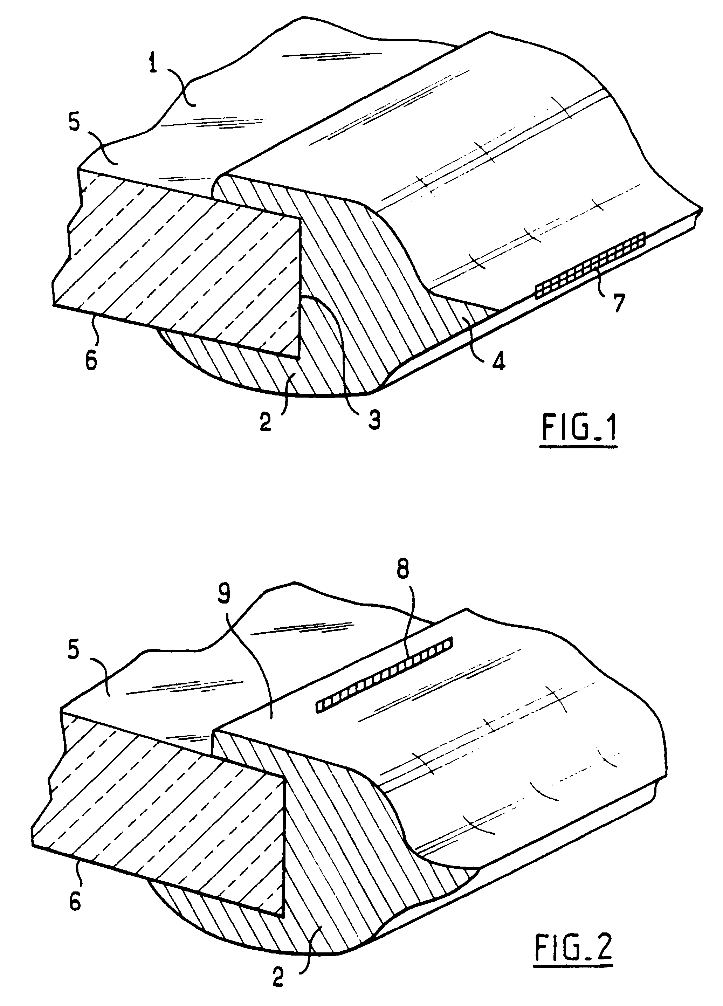

Sur la figure 1, le vitrage 1 est entouré d'une matière plastique 2 enrobant le chant 3 du vitrage. La matière plastique, ou encapsulat, 2 comporte une lèvre 4 de fine épaisseur destinée à recouvrir la baie de carrosserie ou tout autre support. La matière plastique ici représentée déborde sur les faces 5 et 6 du vitrage. Elle peut également affleurer sur l'une des deux faces 5 ou 6, ou sur les deux faces 5 et 6. Le seuil d'injection, référencé en 7, éventuellement non visible, se situe au centre du chant du vitrage. La face visible, une fois le vitrage monté dans la baie de carrosserie, est la face 6.

La figure 2 représente un vitrage selon l'invention. Le seuil d'injection 8 est situé sur la face 9 de l'encapsulat débordant sur la face 5 du vitrage. Il s'agit de la face cachée lorsque le vitrage est monté dans la baie de carrosserie. Il peut également être situé sur la face de l'encapsulat débordant sur la face 6 du vitrage.

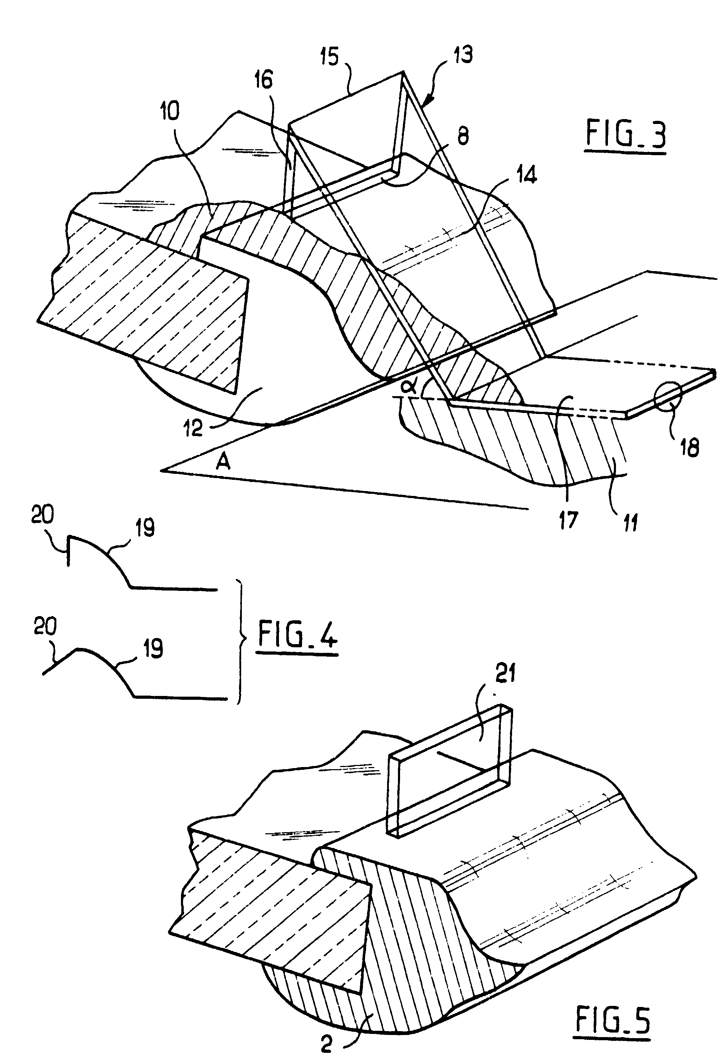

La figure 3 représente une partie du dispositif selon l'invention. Le dispositif comprend, notamment, un moule. Le moule est constitué de deux parties, une partie supérieure 10 et une partie inférieure 11, formant l'empreinte 12 du moule. Cette empreinte est ici représentée dans la partie supérieure et la partie inférieure du moule. Elle peut également n'être située que dans la partie supérieure ou inférieure.

Le canal selon l'invention comprend deux parties 13 et 17. La partie 13 est située hors du plan de joint, représenté en A. Sur cette figure, elle comporte deux segments 14 et 16 : un premier pan incliné 14 et, en contact avec son extrémité 15, un deuxième pan ou appendice d'entrée 16. L'extrémité de l'appendice d'entrée constitue le seuil d'injection 8.

Le pan incliné 14 forme un angle α avec le plan de joint A. Cet angle est, avantageusement, compris entre 30 et 60°.

La largeur du pan incliné 14 peut décroître dans le sens de l'épaisseur du moule, comme illustré sur la figure. Elle peut également augmenter ou être constante. Il va de soi que les dimensions du pan incliné 14 sont indépendantes de celles du canal. De même, les dimensions du pan 16 peuvent varier en fonction des dimensions de l'extrémité 15 du pan incliné 14 et en fonction des dimensions du seuil d'injection 8. Ces dernières, plus précisément l'épaisseur multipliée par la largeur, sont approximativement proportionnelles à la quantité de matière nécessaire pour former l'encapsulat.

Afin de former une ligne de rupture entre l'appendice d'entrée 16 et le pan incliné 14, l'épaisseur de l'extrémité 15 du pan 14 est, par exemple, inférieure ou égale à 4 mm et, de préférence, inférieure ou égale à 2 mm. De façon préférée, l'épaisseur du pan incliné 14 décroît dans le sens de l'épaisseur du moule jusqu'à former une sorte de biseau, non représenté, en son extrémité 15. On obtient ainsi une ligne de rupture satisfaisante tout en maintenant une certaine quantité de matière formée dans le pan incliné 14 afin d'en faciliter l'enlèvement après ouverture du moule. Pour la même raison, l'appendice d'entrée 16 est, de préférence, perpendiculaire au plan de joint A.

La partie du canal 17 de l'invention est située dans le plan de joint A. Elle peut être dans le prolongement de la tête d'injection 18. Cette dernière est, par exemple, une buse d'injection. Elle est située, de préférence, dans le prolongement du plan de joint A.

Cette partie 17 peut être de forme quelconque. Il peut s'agir, par exemple, d'un canal de forme cylindrique ou parallélépipédique ou trapézoïdale. Elle peut également comporter des courbes.

Lorsque la matière injectée est du type RIM (Reaction Injection Moulding) elle comporte, de préférence, un ou des mélangeurs statiques à proximité de la tête d'injection.

La longueur de la partie 17 est fonction de l'utilisation envisagée. Elle peut se restreindre à quelques centimètres.

Les dimensions du canal de l'invention sont telles que la matière plastique formée dans le canal est facilement démoulable, tout en assurant un débit homogène pour alimenter l'empreinte du moule. Des parties mobiles du moule peuvent également être prévues pour faciliter le démoulage.

La figure 4 comporte deux variantes du canal selon l'invention.

La partie du canal 13 comporte, sur ces variantes, deux segments 19 et 20. Le segment 19 peut être courbe, comme illustré sur les schémas 4a et 4b. De même, le segment 20, ou appendice d'entrée, peut être incliné vis-à-vis du plan de joint, comme illustré sur le schéma 4b. Il est avantageusement perpendiculaire au plan de joint, comme illustré sur le schéma 4a. Les angles définis respectivement, d'une part par le segment 19 et, d'autre part, par le segment 20, vis-à-vis du plan de joint sont avantageusement de telle sorte que la matière plastique formée dans ces deux segments est facilement démoulable. Par ailleurs, des éléments mobiles peuvent être prévus pour démouler l'excédent de matière plastique.

Bien entendu, toute variante peut être envisagée sans sortir du cadre de l'invention tel que défini par les revendications.

La figure 5 illustre le vitrage surmoulé ou encapsulé après l'ouverture du moule. La matière plastique 21 formée dans l'appendice d'entrée 16 est alors solidaire de l'encapsulat 2. Elle peut être éliminée par introduction d'une lame coupante suivie, éventuellement, d'un brossage. Tout autre moyen approprié peut également être envisagé.

## Revendications

1. Dispositif pour obtenir un vitrage (1) entouré, sur au moins une partie de sa périphérie, d'une matière plastique surmoulée (2), comprenant une tête d'injection (18), une empreinte (12), un seuil d'injection (8) et une première partie de moule (10) dans la paroi de laquelle est aménagé un canal comprenant ledit seuil d'injection (8) et dont la surface de contact avec une seconde partie de moule (11) forme un plan de joint du moule (A), ledit canal comprenant deux parties, une partie (17) dans le plan de joint du moule (A) et une partie (13) hors du plan de joint du moule (A), dont une extrémité débouche dans l'empreinte du moule (12) en formant ledit seuil d'injection (8) situé sur une face (9) de l'encapsulat (2) recouvrant au moins une partie (5) du vitrage (1), **caractérisé en ce que** la matière plastique surmoulée (2) est formée par injection de type RIM (Reaction Injection Moulding), en ce que la partie (13) du canal hors du plan de joint du moule (A) comporte une section rectangulaire définie par une épaisseur et une largeur, la première étant sensiblement inférieure à la seconde et en ce que le dispositif ne comprend qu'un seuil d'injection (8).

2. Dispositif selon la revendication 1, **caractérisé en ce que** la tête d'injection (18) est située dans le plan de joint du moule (A).

3. Dispositif selon la revendication 1 ou 2, **caractérisé en ce que** le moule est constitué de deux parties (10, 11).

4. Dispositif selon la revendication 1, **caractérisé en ce que** la partie (13) du canal hors du plan de joint du moule (A) est une courbe.

5. Dispositif selon la revendication 1, **caractérisé en ce que** la partie (13) du canal située hors du plan de joint du moule (A) comporte deux segments, un premier segment (14, 19) incliné vis-à-vis du plan de joint du moule (A) et un deuxième segment (16, 20) ou appendice d'entrée dont une extrémité constitue le seuil d'injection (8).

6. Dispositif selon la revendication 5, **caractérisé en ce que** l'extrémité (15) du premier segment (14, 19) en contact avec le deuxième segment (16, 20) constitue une ligne de rupture.

7. Dispositif selon l'une des revendications 5 ou 6, **caractérisé en ce que** la partie (13) du canal située hors du plan de joint du moule (A) comporte deux pans : un premier pan (14) incliné vis-à-vis du plan de joint du moule (A) et un deuxième pan (16) constituant l'appendice d'entrée dont l'extrémité est le seuil d'injection (8).

8. Dispositif selon l'une des revendications précédentes, **caractérisé en ce que** le volume du canal (13, 17) est compris entre 10 et 15 % du volume de l'empreinte (12).

9. Procédé de préparation d'un vitrage (1) entouré, sur au moins une partie de sa périphérie, d'un encapsulat (2) en matière plastique surmoulée, comprenant les étapes de :
• mise en place du vitrage (1) dans l'une des parties (11, 10) d'un moule et éventuellement d'inserts ;
• fermeture de la partie complémentaire (10, 11) du moule ;
• injection de la matière plastique, le seuil d'injection (8) étant situé sur une face (9) de l'encapsulat (2) recouvrant au moins une partie (5) du vitrage (1);
• ouverture du moule ; et
• élimination de l'excédent de matière plastique formée dans le canal (13, 17) et au niveau de l'encapsulat (2)
**caractérisé en ce que** l'injection est du type RIM (Reaction Injection Moulding) et effectuée avec passage dans un canal comprenant deux parties, une partie (17) dans le plan de joint du moule (A) et une partie (13) hors du plan de joint du moule (A) dont une extrémité débouche dans l'empreinte du moule (12) en formant ledit seuil d'injection (8) et qui comporte une section rectangulaire définie par une épaisseur et une largeur, la première étant sensiblement inférieure à la seconde, **et en ce qu**'un seuil d'injection (8) unique est mis en oeuvre.

## Patentansprüche

1. Vorrichtung zur Herstellung einer Verglasung (1), die auf wenigstens einem Teil ihres Umfangs mit einem aufgeformten Kunststoff (2) ummantelt ist, welche einen Spritzkopf (18), ein Formnest (12), einen Spritzabsatz (8) und eine erste Formhälfte (10) umfaßt, in deren Wand ein Kanal angebracht ist, der den Spritzabsatz (8) enthält und dessen Kontaktfläche mit der zweiten Formhälfte (11) eine Verbindungsebene (A) der Form bildet, wobei der Kanal zwei Teile umfaßt, einen Teil (17) in der Verbindungsebene (A) der Form und einen Teil (13) außerhalb der Verbindungsebene (A) der Form, wovon ein Ende in das Formnest (12) mündet, wobei es den Spritzabsatz (8) bildet, der sich auf einer Seite (9) der Umspritzung (2) befindet, die wenigstens einen Teil (5) der Verglasung (1) bedeckt, **dadurch gekennzeichnet, daß** der aufgeformte Kunststoff (2) durch Reaktionsspritzgießen, RIM (Reaction Injection Moulding), gebildet wird, **und daß** der Teil (13) des Kanals außerhalb der Verbindungsebene (A) der Form einen rechtwinkligen Abschnitt enthält, der durch eine Dicke und eine Breite definiert ist, wobei erstere wesentlich kleiner als letztere ist, **und** die Vorrichtung nur einen Spritzabsatz (8) enthält.

2. Vorrichtung nach Anspruch 1, **dadurch gekennzeichnet, daß** sich der Spritzkopf (18) in der Verbindungsebene (A) der Form befindet.

3. Vorrichtung nach Anspruch 1 oder 2, **dadurch gekennzeichnet, daß** die Form aus zwei Hälften (10, 11) besteht.

4. Vorrichtung nach Anspruch 1, **dadurch gekennzeichnet, daß** der Teil (13) des Kanals außerhalb der Verbindungsebene (A) der Form eine Kurve ist.

5. Vorrichtung nach Anspruch 1, **dadurch gekennzeichnet, daß** der Teil (13) des Kanals, der sich außerhalb der Verbindungsebene (A) der Form befindet, zwei Segmente enthält, ein erstes Segment (14, 19), das zur Verbindungsebene (A) der Form geneigt ist, und ein zweites Segment (16, 20) oder Eingangsansatz, wovon ein Ende den Spritzabsatz (8) bildet.

6. Vorrichtung nach Anspruch 5, **dadurch gekennzeichnet, daß** das Ende (15) des ersten Segments (14, 19), das sich im Kontakt mit dem zweiten Segment (16, 20) befindet, eine Bruchlinie bildet.

7. Vorrichtung nach Anspruch 5 oder 6**, dadurch gekennzeichnet, daß** der Teil (13) des Kanals, der sich außerhalb der Verbindungsebene (A) der Form befindet, zwei Flächen enthält, eine erste Fläche (14), die zur Verbindungsebene (A) der Form geneigt ist, und eine zweite Fläche (16), die den Eingangsansatz bildet, dessen Ende der Spritzabsatz (8) ist.

8. Vorrichtung nach einem der vorhergehenden Ansprüche, **dadurch gekennzeichnet, daß** das Volumen des Kanals (13, 17) 10 bis 15 % des Volumens des Formnests (12) beträgt.

9. Verfahren zur Herstellung einer Verglasung (1), die auf wenigstens einem Teil ihres Umfangs mit einer aufgeformten Kunststoffumspritzung (2) ummantelt ist, welches die Stufen
• Anordnen der Glasscheibe (1) und gegebenenfalls von Einbauten in einer Hälfte (11, 10) einer Form,
• Schließen der komplementären Hälfte (10, 11) der Form,
• Einspritzen des Kunststoffs, wobei sich der Spritzabsatz (8) auf einer Seite (9) der Umspritzung (2) befindet, die wenigstens einen Teil (5) der Verglasung (1) bedeckt,
• Öffnen der Form und
• Entfernen des Kunststoffgrats, der sich im Kanal (13, 17) und an der Umspritzung (2) gebildet hat,
umfaßt, **dadurch gekennzeichnet, daß** das Spritzgießen ein Reaktionsspritzgießen, RIM (Reaction Injection Moulding), ist und mit Durchlauf durch einen Kanal durchgeführt wird, der zwei Teile umfaßt, einen Teil (17) in der Verbindungsebene (A) der Form, und einen Teil (13) außerhalb der Verbindungsebene (A) der Form, von dem ein Ende in das Formnest (12) mündet, wobei es den Spritzabsatz (8) bildet, und welcher einen rechtwinkligen Abschnitt enthält, der von einer Dicke und einer Breite definiert wird, wobei erstere wesentlich kleiner als letztere ist, **und daß** ein einziger Spritzabsatz (8) eingesetzt wird.

## Claims

1. Device for obtaining a glazing (1) surrounded, over at least part of its periphery, by a potted plastics material (2), comprising an injection head (18), a cavity (12), an injection threshold (8) and a first mould part (10) in the wall of which is provided a channel incorporating said injection threshold (8) and whose contact surface with a second mould part (11) forms a parting plane of the mould (A), said channel having two portions, a portion (17) in the parting plane of the mould (A) and a portion (13) outside the parting plane of the mould (A), whereof one end issues into the cavity of the mould (12) forming said injection threshold (8) located on a face (9) of the encapsulation (2) covering at least one part (5) of the glazing (1), characterized in that the potted plastics material (2) is formed by reaction injection moulding (RIM), in that the channel portion (13) outside the parting plane of the mould (A) has a rectangular cross-section defined by a thickness and a width, the former being substantially less than the latter and in that the device only has one injection threshold (8).

2. Device according to claim 1, characterized in that the injection head (18) is located in the parting plane of the mould (A).

3. Device according to claim 1 or 2, characterized in that the mould is formed by two parts (10, 11).

4. Device according to claim 1, characterized in that the channel portion (13) outside the parting plane of the mould (A) is a curve.

5. Device according to claim 1, characterized in that the channel portion (13) located outside the parting plane of the mould (A) has two segments, a first segment (14, 19) inclined with respect to the parting plane of the mould (A) and a second segment (16, 20) or intake projection, whereof one end constitutes the injection threshold (8).

6. Device according to claim 5, characterized in that the end (15) of the first segment (14, 19) in contact with the second segment (16, 20) constitutes a break line.

7. Device according to one of the claims 5 or 6, characterized in that the channel portion (13) located outside the parting plane of the mould (A) has two faces, namely a first face (14) inclined with respect to the parting plane of the mould (A) and a second face (16) constituting the intake projection, whose end is the injection threshold (8).

8. Device according to one of the preceding claims, characterized in that the volume of the channel (13, 17) is between 10 and 15% of the volume of the cavity (12).

9. Process for the preparation of a glazing (1) surrounded, over at least part of its periphery, by a potted plastics material encapsulation (2), comprising the stages of:
- placing the glazing (1) in one of the parts (11, 10) of a mould and optionally inserts,
- closing the complimentary part (10, 11) of the mould,
- injecting plastics material, the injection threshold (8) being located on one face (9) of the encapsulation (2) covering at least one part (5) of the glazing (1),
- opening the mould and
- eliminating the plastics material excess formed in the channel (13, 17) and level with the encapsulation (2),
characterized in that the injection is of the reaction injection moulding (RIM) type and is carried out with passage into a channel having two portions, one portion (17) being located in the parting plane of the mould (A) and another portion (13) outside the parting plane of the mould (A), whereof one end issues into the cavity of the mould (2) whilst forming the injection threshold (8) and which has a rectangular cross-section defined by a thickness and a width, the former being significantly smaller than the latter, and in that there is a single injection threshold (8).
